# EUROPÄISCHE PATENTSCHRIFT

(11) **EP 0 687 423 B1**
(45) Veröffentlichungstag und Bekanntmachung des Hinweises auf die Patenterteilung: **31.05.2000**
(21) Anmeldenummer: 95109277.4
(22) Anmeldetag: 15.06.1995
(51) Int. Cl.: A23L 1/223, A23L 1/224, A23B 7/024, A23C 19/09

(54) **Bärlauch (Allium ursinum), insbesondere als Gewürz, Verfahren zu seiner Aufbereitung und Verwendung**
Wild garlic (allium ursinum), particularly as a seasoning agent; process for preparing it and use
Ail sauvage (allium ursinum), en particulier comme condiment, procédé pour le préparer et application

(30) Priorität: 17.06.1994 DE 4421334
(43) Veröffentlichungstag der Anmeldung: 20.12.1995
(73) Patentinhaber: Munk, Werner Georg, 88267 Vogt über Ravensburg (DE)
(72) Erfinder: Munk, Werner Georg, 88267 Vogt über Ravensburg (DE)
(74) Vertreter: Patentanwälte Ruff, Beier, Schöndorf und Mütschele

(56) Entgegenhaltungen:
- EP-A- 0 538 708
- CH-A- 540 013
- DE-A- 2 101 880
- PATENT ABSTRACTS OF JAPAN vol. 017 no. 171 (C-1044) ,2.April 1993 & JP-A-04 330261 (SAIKIN) 18.November 1992,
- DATABASE WPI Section Ch, Week 9326 Derwent Publications Ltd., London, GB; Class D13, AN 93-212747 & SU-A-1 746 988 (W SIBE TECHN INST) , 15.Juli 1992

## Beschreibung

Die Erfindung betrifft Bärlauch (Allium ursinum), insbesondere als Gewürz, ein Verfahren zu seiner Aufbereitung und seine Verwendung.

Bärlauch (Allium ursinum) kommt in der Natur, vor allem in Buchenwäldern, vor. Bärlauch wurde früher als bewährtes Hausmittel gegen zahlreiche Beschwerden, wie Verdauungsstörungen, Schlaflosigkeit und unreine Haut eingenommen. Ähnlich wie Knoblauch kann auch Bärlauch zur Senkung von Bluthochdruck und von überhöhten Fett- und Cholesterinwerten eingenommen werden. Im Gegensatz zu Knoblauch wird bei Bärlauch das Blatt geerntet. Hierbei handelt es sich um längliche Niederblätter, die auch Spreite genannt werden. Ähnlich wie Knoblauch hat Bärlauch auch hervorragende Würzeigenschaften und wird deshalb in der gehobenen Küche Speisen als Frischgewürz in zerkleinerter Form zugegeben.

Der Erfindung liegt die Aufgabe zugrunde, die Verwendung von Bärlauch auf eine breitere Basis zu stellen, zumal die Zeitdauer, während der Bärlauch geerntet werden kann, relativ kurz ist. Die Erfindung ist dadurch gekennzeichnet, daß große Blattstücke bis ganze Blätter (Spreiten) von Bärlauch gefriergetrocknet sind. Bevorzugt handelt es sich um ganze Blätter. Die Bildung von Bruchstücken bei der Handhabung gefrorener Blätter läßt sich aber aus Gründen der wirtschaftlichen Verarbeitung nicht vermeiden. So kann ein Großteil der Blätter einmal oder auch mehrfach unter Bildung mehr oder weniger großer Bruchstücke gebrochen sein.

Die Gefriertrocknung von Nahrungsmitteln, insbesondere auf pflanzlicher Basis ist bekannt. Bei Bärlauch war aufgrund des hohen Gehaltes an Wirkstoffen, an Aromastoffen und an flüchtigen ätherischen Ölen und insbesondere seiner Empfindlichkeit, zu befürchten, daß diese Stoffe während der Gefriertrocknung verlorengehen bzw. wieder rückgeführt werden müssen. Überraschenderweise hat sich jedoch gezeigt, daß bei der Gefriertrocknung großer Blattstücke bzw. ganzer Blätter die Wirkstoffe, Aromastoffe und ätherische Öle weitgehend im Blatt eingeschlossen bleiben, so daß dem Blatt im wesentlichen nur sein Feuchtigkeitsgehalt entzogen wird. Der Einschluß bzw. die Verkapselung der genannten Wirkstoffe infolge der Gefriertrocknung großer Blattstücke und der Vermeidung von Schnittstellen ermöglicht es sogar, die Gefriertrocknung unter scharfen Bedingungen durchzuführen, das heißt unter Anwendung eines relativ hohen Vakuums, was sich wiederum günstig auf die Rekonstituierbarkeit auswirkt. Eine Gefriertrocknung, wie sie bei Schnittlauch und Petersilie in kleingeschnittener Form bekannt ist, würde demgegenüber zu einem Verlust von wertvollen Eigenschaften des Bärlauchs führen.

Dadurch, daß Bärlauch in erfindungsgemäßer Weise in gefriergetrockneter Form vorliegt, kann er leicht bevorratet und vielen Anwendungsmöglichkeiten zugeführt werden. Hierbei ist es von Vorteil, daß Bärlauch nach dem Verzehr nicht die unangenehmen Geruchsfolgen hat, wie dies beim Knoblauch allgemein bekannt ist.

Bärlauch ist thermisch außerordentlich empfindlich. Erfindungsgemäß ist es deshalb vorgesehen, während der Aufbereitung von Bärlauch, zumindest solange er noch merkliche Mengen an Feuchtigkeit enthält, jegliche Erwärmung zu vermeiden. Dies wird vorzugsweise auch bei seiner Anwendung beachtet. Begünstigt wird dies dadurch, daß gefunden wurde, daß Bärlauch Eigenschaften besitzt, die wachstumshemmend auf am Bärlauch anhaftende Mikroorganismen wirken. Während andere Gewürze, wie beispielsweise Schnittlauch und Petersilie, keimfrei gemacht werden müssen, wozu insbesondere eine Begasung mit chemischen Substanzen vorgenommen wird, ist der erfindungsgemäß gefriergetrocknete Bärlauch vorzugsweise frei von einer Behandlung zur Keimfreimachung und kann nach seiner Rekonstitution sogar zur Würzung von zur Lagerung bestimmten, empfindlichen Nahrungsmitteln eingesetzt werden, ohne daß sich mitgeschleppte Mikroorganismen schädlich auf die Nahrungsmittel auswirken. Dies trägt auch dazu bei, von einer thermischen Behandlung zum Zwecke der Sterilisierung oder Pasteurisierung abzusehen.

Bei dem Bärlauch handelt es sich vorzugsweise um die Wildform von Bärlauch. Bärlauch kommt in ausreichender Menge in natürlichen Beständen vor, so daß die Blätter vorzugsweise aus natürlichen Beständen gesammelt sind. Dadurch, daß nur die Blätter geerntet werden, die Knolle aber im Boden verbleibt, werden diese Bestände bei der Ernte nicht gefährdet.

Die gefriergetrockneten Blätter haben eine gleichmäßig hellgrüne bis blaßgrüne Farbe, die bei der Rekonstituierung der Bärlauchblätter mit Wasser wieder in die sattgrüne ursprüngliche Farbe zurückgeht. Aufbewahrt wird der gefriergetrocknete Bärlauch vorzugsweise in aromadicht und insbesondere auch lichtdicht verschlossenen Behältnissen und kann so über lange Zeit gelagert werden. Bärlauch kann in Form der ganzen Blätter zur Anwendung kommen, was auch aus dekorativen Gründen erwünscht sein kann. Die ganzen Blätter können durch Eintauchen in Wasser oder wäßrige Nahrungsmittel-Flüssigkeiten schnell und in einfacher Weise rekonstituiert werden. Bärlauch kann aber auch zur Reduzierung des Wassergehaltes von anderen Nahrungsmitteln verwendet werden, indem er den Nahrungsmitteln als Ganzes oder in zerkleinerter Form trocken zugegeben wird und dann bei der Rekonstitution diesen Nahrungsmitteln Feuchtigkeit entzieht. Es ist auch möglich, die Bärlauchblätter im gefriergetrockneten Zustand zu zerkleinern, so daß der Bärlauch je nach gewünschter Anwendung in Stückchenform von etwa 2 bis 4 mm Größe oder als Gewürzpulver mit einer Teilchengröße unter 1 mm vorliegt. Die größeren Teilchen haben eine besondere dekorative Wirkung bei der Anwendung. Bei feinerer Zerkleinerung wird die Freisetzung von Aroma begünstigt. Die Teilchengröße kann auch über den gesamten Bereich verteilt sein. Auch die zerkleinerten gefriergetrockneten Bärlauchblätter können sehr schnell und sehr leicht rekonstituiert werden. In vielen Fällen kann es vorteilhaft sein, bei der Rekonstitution nur eine verhältnismäßig geringe Flüssigkeitsmenge zu verwenden, so daß der Bärlauch in teilweise rekonstituierter Form vorliegt. Die restliche Feuchtigkeit bzw. Flüssigkeit kann der Bärlauch dann den jeweiligen Nahrungsmitteln, denen er zugesetzt ist, entziehen. Eine Zerkleinerung wird vorzugsweise erst kurz vor der Anwendung des Bärlauchs, z.B. durch Vermahlen, vorgenommen, um den Aroma- und Wirkstoffgehalt hoch zu halten.

Wie oben bereits erwähnt, eignet sich Bärlauch als Gewürz für zahlreiche Nahrungsmittel und stellt in Geschmack und Aussehen in etwa eine Kombination aus Schnittlauch und Knoblauch dar. Bärlauch kann auch in Verbindung mit empfindlichen, insbesondere kühlpflichtigen, Nahrungsmitteln vorliegen, ohne diese bei der Lagerung nachteilig zu beeinflussen. Hierbei sind solche Nahrungsmittel bevorzugt, die ebenso wie der Bärlauch frei von Konservierungsstoffen sind. Der Bärlauch eignet sich insbesondere zur Geschmacksverbesserung von Nahrungsmitteln aus biologischem Anbau. Unter den Nahrungsmitteln sind insbesondere wiederum verarbeitete Milchprodukte, die auch als veredelte Milchprodukte bezeichnet werden, geeignet, insbesondere dann, wenn sie nach dem Zusatz des Bärlauchs keiner nachfolgenden Thermisierung unterworfen sind. Besonders bevorzugt sind wiederum solche Milchprodukte, die aus ihrer Verarbeitung stammende Keime enthalten. Die Lagerfähigkeit solcher Produkte kann noch dadurch begünstigt sein, daß sie insbesondere aufgrund ihrer Verarbeitung leicht sauer sind, beispielsweise einen pH-Wert im Bereich von ca. 4 besitzen. Bevorzugte Milchprodukte sind Frischkäse, insbesondere geschöpfter Frischkäse, sowie Streichkäse, Quark, Joghurt, Creme Fraiches. Die Menge, in der Bärlauch in den Nahrungsmitteln vorliegt, kann geringgehalten werden, da Bärlauch eine sehr starke aromatisierende Wirkung besitzt. In der Regel beträgt der Gehalt an Bärlauch 0,01 bis 1, insbesondere 0,1 bis 0,5 Gew.%. Bei stark wasserhaltigen Nahrungsmitteln sind geringere Mengen bevorzugt im Bereich von 0,01 bis 0,3 Gew.%, wogegen bei Nahrungsmitteln mit höherem Trockengehalt oder mit relativ hohem Fettgehalt größere Mengen bevorzugt sind, insbesondere im Bereich von 0,2 bis 1 Gew.%. So kann Kräuterbutter beispielsweise 1 bis 2 Gew.% gefriergetrocknete Bärlauchblätter enthalten, die trocken eingemischt sind. (Die Gewichtsprozente (Gew.%) sind bezogen auf das Trockengewicht des gefriergetrockneten Bärlauchs und das Gewicht des damit versetzten Nahrungsmittels).

In Verbindung mit Käse, insbesondere Frischkäse, kann Bärlauch sowohl im Innern des Käse als auch auf dessen Oberfläche vorliegen. Auf der Oberfläche wirkt sich der Bärlauch geruchlich und optisch vermehrt aus, wogegen Bärlauch im Innern stärker geschmacklich zur Wirkung kommt. Deshalb ist eine kombinierte Anwendung bevorzugt. Auf die bevorzugte Form der Einbringung wird nachfolgend näher eingegangen.

Bärlauch ist ein in sich abgerundetes Gewürz. Es kann, wenn erwünscht, auch mit anderen Gewürzen und/oder Salz vermischt werden. Besonders bevorzugt ist es jedoch, daß das Gewürz bzw. die Gewürzmischung frei von Konservierungsstoffen und/oder Geschmacksverstärkern ist. Da Bärlauch nicht nur Würzeigenschaften hat, sondern aufgrund seiner Inhaltsstoffe auch gesundheitsfördernd ist, sind auch andere Verabreichungsformen möglich. So kann er in Form von Preßlingen oder Tabletten vorliegen, die ggf. mit einem üblichen Überzug versehen sind, oder in Kapseln abgefüllt sein. Es ist auch möglich, den gefriergetrockneten Bärlauch in ganzer oder in zerkleinerter Form zu dünnen Tafeln zu pressen, um ihn in raumsparender und leicht portionierbarer Form zur Verfügung zu haben. Auch in dieser gepreßten Form ist er noch leicht rekonstituierbar.

Die Erfindung betrifft auch ein Verfahren zur Aufbereitung von Bärlauch. Dieses ist dadurch gekennzeichnet, daß ganze Blätter bzw. Spreiten von Bärlauch (Allium ursinum) oder zumindest große Bruchstücke davon gefriergetrocknet werden, wobei die Blattemperaturen unter 35 °C, insbesondere unter 30 °C, gehalten werden. Zur Vorbereitung der Gefriertrocknung werden die Bärlauchblätter, vorzugsweise in loser Schüttung, tiefgefroren, insbesondere auf Temperaturen im Bereich von minus 30 °C bis minus 50 °C. Eine schnelle Kühlung ist bevorzugt. Die Kühlung kann mit Kühlgasen, wie Kaltluft, Stickstoff, durchgeführt werden. Wird flüssiger Stickstoff eingesetzt, dann wird darauf geachtet, daß die Blätter nicht mit flüssigem Stickstoff, sondern nur mit verdampftem Stickstoff in Berührung kommen, da die Blätter bei Berührung mit flüssigem Stickstoff geschädigt werden können. Bei der Gefriertrocknung wird vorzugsweise mit geringem Druck unter 10 mbar, insbesondere unter 5 mbar gearbeitet. Weiterhin wird die Gefriertrocknung mit Vorteil sehr weit durchgeführt, insbesondere bis auf einen Rest-Wassergehalt von ca. 2 %, um den Bärlauch in einer gut konservierten und haltbaren Form vorliegen zu haben. Bei der gesamten Handhabung des Bärlauchs wird darauf geachtet, daß die Temperaturen im Bereich unter 35 °C, insbesondere unter 30 °C, bleiben, um eine Schädigung zu vermeiden. Dies gilt auch für die Zugabe zu anderen Nahrungsmitteln. Eine bloße Vakuumtrocknung scheidet aus diesem Grunde aus.

Obwohl Bärlauch sehr viel flüchtige Bestandteile enthält, ist der Aromaverlust durch die Gefriertrocknung erstaunlich gering. Es erübrigt sich deshalb ein gesondertes Auffangen und Rückführen von verflüchtigten Aromastoffen und dergleichen. Das Verbleiben der flüchtigen Stoffe im Blatt ist im wesentlichen darauf zurückzuführen, daß ganze Blätter gefriergetrocknet werden und keine künstlichen Schnittstellen geschaffen sind. Ein Zerbrechen der gefrorenen aber noch nicht getrockneten Blätter bei ihrer Handhabung muß aus wirtschaftlichen Gründen hingenommen werden.

Bevorzugt werden erntefrische Blätter von Bärlauch verarbeitet. Eine besondere Vorbehandlung, wie ein Sterilisieren, eine Begasung oder Bestrahlung, entfällt. Es reicht aus, wenn die geernteten Bärlauchblätter mit Wasser (ohne Zusätze) gewaschen und dann, beispielsweise durch Abtropfenlassen oder mittels eines Rüttelsiebes, von der Hauptmenge anhaftenden Wassers befreit werden. Die Blätter werden dann eingefroren und können, wenn erwünscht, im Tiefkühlbereich insbesondere bei Temperaturen von minus 18 bis minus 20 °C gelagert werden. Werden sie vor der Gefriertrocknung in der angegebenen Weise gelagert, dann erfolgt vor Gefriertrocknung nochmals eine Kühlung auf Temperaturen von minus 30 bis minus 50 °C. Liegen längere Transportwege zwischen der Erntestelle und der Verarbeitungsstelle, dann werden die Bärlauchblätter vorzugsweise im wesentlichen unmittelbar nach der Ernte gekühlt und unter Kühlung transportiert. Das Tiefkühlen sollte aber nach Möglichkeit innerhalb von 1 bis 2 Tagen nach der Ernte erfolgen.

Wie bereits erwähnt, können die gefriergetrockneten Bärlauchblätter, nachdem die Gefriertrocknung abgeschlossen ist, ohne nachteilige Wirkung zerkleinert werden, was zur Vermeidung von Aromaverlusten vorzugsweise erst kurz vor der Anwendung geschieht. Die Lagerung der gefriergetrockneten Bärlauchblätter erfolgt vorzugsweise in noch nicht zerkleinerter Form, um das Aroma und die Farbe so frisch wie möglich zu halten. Eine solche Zerkleinerung kann durch Vermahlen erfolgen, wobei auch hier darauf geachtet wird, daß die Temperaturen unter 35 °C, insbesondere unter 30 °C bleiben. Die zerkleinerten Blätter können durch Sieben in bestimmte Fraktionen eingeteilt und die einzelnen Fraktionen dann unterschiedlichen Anwendungszwecken zugeführt werden. Eine Rekonstituierung kann mit reinem Wasser erfolgen. Hierzu können auch Flüssigkeiten von Nahrungsmitteln verwendet werden, mit denen der Bärlauch vereinigt wird. Der Bärlauch kann Nahrungsmitteln in trockener Form zugegeben werden und entzieht diesen dann Flüssigkeit. Es kann auch vorteilhaft sein, den gefriergetrockneten Bärlauch nur teilweise durch Zusatz von Wasser oder Nahrungsmittelflüssigkeiten zu rekonstituieren, so daß der Wassergehalt niedriger ist als der Wassergehalt von frischem Bärlauch, und den teilweise rekonstituierten Bärlauch dann mit den Nahrungsmitteln in Verbindung zu setzen. Bärlauch kann auch in trockener Form im wesentlichen Nahrungs- und/oder Genußmitteln zugesetzt werden. Gefriergetrockneter Bärlauch kann in trockener und zerkleinerter Form mit Vorteil mit Butter zur Zubereitung von Kräuterbutter vermischt werden.

Besonders geeignet ist Bärlauch zur Würzung von Frischkäse. In zentrifugierten Frischkäse, wie Quark und Streichkäse, kann Bärlauch nach dem Zentrifugieren eingemischt werden.

Gefriergetrockneter Bärlauch eignet sich in hervorragender Weise zur Würzung von Schöpfkäse. Es hat sich herausgestellt, daß Bärlauch Schöpfkäse zugesetzt werden kann, solange dieser noch nicht völlig abgesetzt ist. Beim weiteren Absetzen wächst der Bärlauch in den Schöpfkäse ein. Wird der Bärlauch in der nicht keimfrei gemachten Form zugegeben, was bevorzugt ist, dann hat eine fortgeschrittene oder fertige Reifung des Käse den Vorteil, daß die bei der Reifung des Käse zur Anwendung kommenden Mikroorganismen mengenmäßig in einer solchen Anzahl vorliegen, daß durch den Bärlauch eingeschleppte Mikroorganismen sich nicht mehr nachteilig auf den Käse auswirken können. Hinzu kommt die vom Bärlauch auf die mitgeschleppten Mikroorganismen ausgeübte Hemmwirkung auf deren Wachstum, so daß die damit versetzten Nahrungsmittel, selbst dann, wenn sie bei der Lagerung kühlpflichtig sind, ohne Schädigung in bestimmungsgemäßer Weise gelagert werden können.

Bei Schöpfkäse ist ein geeignetes Zugabestadium dann erreicht, wenn sich der Käse noch deutlich absetzen kann. So kann er mit Vorteil in einem Stadium mit dem Bärlauch versehen werden, von dem aber sich noch mindestens auf zwei Drittel bis ein Drittel, insbesondere etwa auf die Hälfte seiner Höhe zu senken vermag. Bärlauch wird vorzugsweise in den Käse eingebracht. Bei Schöpfkäse muß hier sehr vorsichtig vorgegangen werden, da er sich in seiner Struktur sehr leicht zerstören läßt. Bei einer geeigneten Methode wird Bärlauch in zerkleinerter Form in Molke, insbesondere in der Molke des Schöpfkäse, suspendiert und rekonstituiert. Diese Suspension kann dann in den Frischkäse eingeimpft, insbesondere eingespritzt werden. Die Molke sickert beim weiteren Absetzen des Käse aus diesem heraus, so daß die einzelnen Bärlauchstückchen im Käse eingebettet sind. Bei einer anderen Methode, die mit der vorhergehenden kombiniert werden kann, werden einzelne Portionen von Schöpfkäse, die miteinander zusammenpassende Flächen aufweisen, an diesen Flächen mit Bärlauch belegt, wobei ausreichende Flächenbezirke freigelassen werden. Nach Aufeinanderlegen bzw. Aneinanderlegen der einzelnen Portionen können diese dann an den nicht mit Bärlauch belegten Berührungsflächen während des weiteren Absetzens zusammenwachsen, so daß ein Frischkäse erhalten wird, der eine, ggf. auch mehrere Zwischenflächen aufweist, in die Bärlauchstückchen eingebettet sind. Zusätzlich kann die sichtbare Oberfläche des fertigen Frischkäse mit ganzen Bärlauchblättern oder zerkleinertem Bärlauch belegt werden.

Gefriergetrockneter Bärlauch kann, wenn der Verlust der Wirkstoffe hingenommen wird, auch Nahrungsmittel zugesetzt werden, die zur Herstellung und/oder Konservierung erhitzt werden. Die Aromastoffe des Bärlauchs bleiben insbesondere dann im Nahrungsmittel, wenn die Erhitzung in geschlossenen Systemen, wie Konservendosen und/oder in Gegenwart von Fett erfolgt. So eignet sich gefriergetrockneter Bärlauch auch zur Würzung von Wurst, insbesondere Leberwurst in Dosen oder Gläsern. Überraschenderweise wurde gefunden, daß Bärlauch die Würzwirkung von Kochsalz stark erhöht, so daß die zu verwendende Kochsalzmenge im Vergleich zur normalerweise verwendeten Menge stark vermindert werden kann, insbesondere auf ca. die Hälfte. Dies ist für die diätetische Ernährung von besonderer Bedeutung. Auch bei Knabbergebäck und anderen gesalzenen Snack-Artikeln läßt sich der Salzgehalt durch Zusatz von Bärlauch verringern. So kann bei Kräuter-Kartoffelchips, bei denen statt Paprika feinstgemahlenes Bärlauchpulver verwendet wird, ohne Geschmacksverlust auf die Hälfte der sonst üblichen Salzmenge verzichtet werden.

Weitere Merkmale und Vorteile der Erfindung ergeben sich aus der nachfolgenden Beschreibung von bevorzugten Beispielen in Verbindung mit den Unteransprüchen. Hierbei können die einzelnen Merkmale jeweils für sich allein oder in Kombination miteinander bei einer Ausführungsform der Erfindung verwirklicht sein.

### Beispiel 1

In einem Buchenwald mit natürlichem Vorkommen von Bärlauch werden während der Erntezeit im Frühjahr die Niederblätter von Bärlauch am Stiel gepflückt oder geschnitten, wobei sorgfältig vorgegangen wird, um ein Verletzen der Blätter und ein Öffnen der Blattkanäle zu vermeiden. Auf diese Weise verbleiben die Wirkstoffe mit dem Pflanzensaft in den geernteten Blättern. Das Ernten erfolgt von Hand, um Verwechslungen mit in Buchenwäldern ebenfalls vorkommenden Maiglöckchenblättern auszuschließen. Die geernteten Blätter werden in einem Kühltransporter zur Verarbeitungsstelle gebracht und dort mit kaltem Wasser mit Trinkwasserqualität, ohne Zugabe von irgendwelchen Zusatzstoffen oder Waschmitteln, vorsichtig gewaschen und nach Abtropfen des Wassers in einen Kühltunnel geführt, in dem die ganzen Blätter in an sich bekannter Weise eingefroren werden, indem sie rasch auf Temperaturen im Bereich von minus 30 bis minus 40 °C gebracht werden. Das Einfrieren erfolgt in loser Schüttung, wobei darauf geachtet wird, daß die Blätter einzeln bleiben und ein Verbinden mehrerer Blätter zu größeren Konglomeraten vermieden wird. Die gefrorenen Bärlauchblätter sind außerordentlich brüchig, so daß sich die Bildung von Bruchstücken bei ihrer Handhabung nicht vermeiden läßt. Die tiefgefrorenen Blätter werden dann unmittelbar in die Gefriertrocknung geführt, wobei mit einem Vakuum von 4 mbar und indirekter Beheizung gearbeitet wird. Auch hier wird bei der Wärmezufuhr darauf geachtet, daß die Blattemperaturen niedrig, d.h. unter 30 °C bleiben. Die Gefriertrocknung wird bis zu einem Rest-Wassergehalt von 2 % durchgeführt.

Die gefriergetrockneten Blätter können in trockenem Zustand als Ganzes oder nach vorheriger Zerkleinerung aufbewahrt werden. Hierzu sind Gläser, Dosen und andere luftdichte Verpackungen, wie Aluminiumfolienbeutel, geeignet.

### Beispiel 2

Zerkleinerte gefriergetrocknete Bärlauchblätter werden ggf. unter Zusatz eines natürlichen Bindemittels zu Tabletten verpreßt und dann mit einem bei Dragees üblichen dichten Überzug versehen. Die erhaltenen Dragees können wie Knoblauchpillen eingenommen werden und haben im wesentlichen die volle gesundheitsfördernde Wirkung wie frischer Bärlauch.

Eine Alternative hierzu sind Gelatine-Hartkapseln, die unvermischtes trockenes Bärlauchpulver oder Bärlauchgranulat enthalten, das durch kaltes Verpressen von Bärlauchpulver mit Lactose und anschließendes schonendes Vermahlen erhalten wird.

### Beispiel 3

Frischkäse (Schöpfkäse) wird unter Verwendung von Milch mit einer Säurungskultur angesetzt und einer Lab-Fermentierung unterworfen. Aus zerkleinertem gefriergetrocknetem Bärlauch und aus dem Frischkäse austretender Molke wird unter Rekonstituierung des Bärlauchs eine spritzfähige Paste angerührt, die einen Feststoffgehalt von ca. 40 % besitzt. Diese Paste wird mittels Spritzen vorsichtig in den geschöpften aber noch nicht völlig abgesetzten Frischkäse an mehreren Stellen eingespritzt. Beim weiteren Absetzen auf etwa die Hälfte seiner Höhe werden die Bärlauchstückchen in den sich verfestigenden Frischkäse eingebettet und verleihen diesem ein würziges Aroma. Der fertige Frischkäse kann dann zusätzlich durch Bestreuen oder Belegen mit Bärlauch dekoriert werden.

### Beispiel 4

Frischkäse (Schöpfkäse) wird so angesetzt, daß flache, runde Scheiben von ca. 3 cm Höhe erhalten werden. Nach teilweisem Absetzen wird die ebene Oberfläche einer Scheibe stellenweise mit trockenen Stückchen von gefriergetrocknetem Bärlauch belegt, wobei etwa 50 % der Oberfläche freibleiben. Eine zweite Scheibe wird vorsichtig auf die belegte Oberfläche der ersten Scheibe gelegt. Man läßt den erhaltenen Sandwich dann vollständig absetzen, wobei die beiden Scheiben an den nicht belegten Stellen bei der weiteren Reifung zusammenwachsen und einen einheitlichen Käseblock bilden. Es ist auch möglich, Bärlauchpulver bereits beim Schöpfen des Frischkäse-Bruchs zuzusetzen, insbesondere dann, wenn portionsweise geschöpft wird. Es kann dann gewartet werden, bis sich eine geschöpfte Käseportion etwas abgesetzt hat. Vor dem Nachschöpfen der nächsten Portion wird Bärlauch auf die Oberfläche der vorhergehenden Portion aufgestreut.

### Beispiel 5

Zur Herstellung von Dosenwurst werden in üblicher Weise rohes Kochfleisch und Zwiebeln durch den Fleischwolf gedreht und grob zerkleinert. Gekochte Haut wird getrennt zerkleinert und zusammen mit Fleischbrühe aus dem Kessel zugemischt. Dabei wird die übliche Kochsalzmenge zugesetzt, wobei die normalerweise verwendete Majoran enthaltende Würzmischung durch gefriergetrocknetes Bärlauchpulver (Teilchengröße < 1 mm) ersetzt wird. Die Bärlauchmenge beträgt 0,25 Gew% bezogen auf die Wurstmasse. Nach Abfüllen in Dosen und zweistündiges Kochen läßt man in kaltem Wasser abkühlen. Die fertige Wurst hat einen würzigen Geschmack nach Hausmacher Art, wirkt aber versalzen. Das Beispiel wurde deshalb wiederholt unter Verwendung der halben Kochsalzmenge. Dabei wurde eine wohlschmeckende Kochwurst erhalten.

## Patentansprüche

1. Bärlauch (Allium ursinum), insbesondere als Gewürz, dadurch gekennzeichnet, daß große Blattstücke bis ganze Blätter (Spreiten) gefriergetrocknet sind.

2. Bärlauch nach Anspruch 1, dadurch gekennzeichnet, daß er frei von einer Behandlung zur Keimfreimachung ist.

3. Bärlauch nach Anspruch 1 oder 2, dadurch gekennzeichnet, daß er frei von einer thermischen Behandlung ist.

4. Bärlauch nach einem der vorhergehenden Ansprüche, dadurch gekennzeichnet, daß er, von der Gefriertrocknung abgesehen, in nativer unbehandelter Form vorliegt.

5. Bärlauch nach einem der vorhergehenden Anspüche, dadurch gekennzeichnet, daß es sich um die Wildform von Bärlauch handelt und die Blätter vorzugsweise in natürlichen Beständen gesammelt sind.

6. Bärlauch nach einem der vorhergehenden Ansprüche, dadurch gekennzeichnet, daß die gefriergetrockneten Blätter in einer für die vorgesehene Würzung geeigneten zerkleinerten Form vorliegen.

7. Bärlauch nach einem der vorhergehenden Ansprüche, dadurch gekennzeichnet, daß er in mit Flüssigkeiten auf wäßriger Basis, insbesondere Nahrungsmittel-Flüssigkeiten, mindestens teilweise rekonstituierter Form vorliegt.

8. Bärlauch nach einem der vorhergehenden Ansprüche, dadurch gekennzeichnet, daß er in mindestens teilweise rekonstituierter Form in Verbindung mit kühlpflichtigen Nahrungsmitteln vorliegt, die vorzugsweise frei von Konservierungsstoffen sind.

9. Bärlauch nach einem der vorhergehenden Ansprüche, dadurch gekennzeichnet, daß er in Verbindung mit verarbeiteten (veredelten) Milchprodukten vorliegt, die nach dem Zusatz des Bärlauchs vorzugsweise nicht erhitzt sind.

10. Bärlauch nach Anspruch 9, dadurch gekennzeichnet, daß die Milchprodukte aus ihrer Verarbeitung stammende Keime enthalten und vorzugsweise leicht sauer sind.

11. Bärlauch nach Anspruch 9 oder 10, dadurch gekennzeichnet, daß er im Inneren und/oder auf der Oberfläche von Frischkäse vorliegt.

12. Bärlauch nach einem der vorhergehenden Ansprüche, dadurch gekennzeichnet, daß er in Form eines Würzpulvers ggf. in Mischungen mit anderen Gewürzen und/oder Salz, ohne Beimengung von Konservierungsstoffen und/oder Geschmacksverstärkern vorliegt.

13. Bärlauch nach einem der vorhergehenden Ansprüche, dadurch gekennzeichnet, daß er in Form von Kapseln oder ggf. mit einem Überzug versehenen Tabletten oder Preßlingen vorliegt.

14. Verwendung von Bärlauch nach einem der Ansprüche 1 bis 7 als Würzstoff für Nahrungs- und Genußmittel.

15. Verwendung von Bärlauch nach einem der Ansprüche 1 bis 7 zur Verringerung des Kochsalzgehaltes bei gesalzenen Nahrungsmitteln, insbesondere Wurst.

16. Verwendung von nach der Gefriertrocknung im Bärlauch enthaltenen wachstumshemmenden Stoffen zur Hemmung des Wachstums von mit Bärlauch mitgeschleppten Keimen in damit gewürzten Nahrungsmitteln.

17. Verfahren zur Aufbereitung von Bärlauch nach einem der Ansprüche 1 bis 13, dadurch gekennzeichnet, daß ganze Blätter bzw. Spreiten von Bärlauch (Allium ursinum) eingefroren und gefriergetrocknet werden, wobei die Blattemperaturen unter 35 °C, insbesondere unter 30 °C, gehalten werden.

18. Verfahren nach Anspruch 17, dadurch gekennzeichnet, daß die Gefriertrocknung bei einem Druck von < 10 mbar, insbesondere < 5 mbar, durchgeführt wird.

19. Verfahren nach Anspruch 17 oder 18, dadurch gekennzeichnet, daß die Gefriertrocknung bis auf einen Rest-Wassergehalt von ca. 2 % durchgeführt wird.

20. Verfahren nach einem der Ansprüche 17 bis 19, dadurch gekennzeichnet, daß die Gefriertrocknung ohne Rückführung von Aromen durchgeführt wird.

21. Verfahren nach einem der Ansprüche 17 bis 20, dadurch gekennzeichnet, daß erntefrische Blätter ohne weitere Vorbehandlung mit Wasser gewaschen, schonend von der Hauptmenge des anhaftenden Wassers befreit, eingefroren und, ggf. nach einer Zwischenlagerung im Tiefkühlbereich, der Gefriertrocknung zugeführt werden.

22. Verfahren nach einem der Ansprüche 17 bis 21, dadurch gekennzeichnet, daß die Blätter im wesentlichen unmittelbar nach der Ernte gekühlt werden und ggf. unter Kühlung transportiert werden.

23. Verfahren nach einem der Ansprüche 17 bis 22, dadurch gekennzeichnet, daß die gefriergetrockneten Blätter zerkleinert und die zerkleinerten Blätter vorzugsweise nach ihrer Größe fraktioniert werden.

24. Verfahren nach einem der Ansprüche 17 bis 23, dadurch gekennzeichnet, daß die ggf. zerkleinerten Blätter mit wäßrigen Flüssigkeiten mindestens teilweise rekonstituiert werden.

25. Verfahren nach Anspruch 24, dadurch gekennzeichnet, daß zur Rekonstitution weniger Flüssigkeit verwendet wird als dem natürlichen Wassergehalt der Bärlauchblätter entspricht und die restliche Wassermenge ggf. einem wasserhaltigen, mit dem Bärlauch versetzten Nahrungs-und/oder Genußmittel entzogen wird.

26. Verfahren nach einem der Ansprüche 17 bis 25, dadurch gekennzeichnet, daß der Bärlauch in Frischkäse, vorzugsweise in weitgehend, aber noch nicht vollständig gefertigten Schöpfkäse eingebracht wird.

27. Verfahren nach nach Anspruch 26, dadurch gekennzeichnet, daß das Einbringen des Bärlauchs in einem Molkenablaufstadium von Schöpfkäse vorgenommen wird, vorzugsweise einem solchen von dem ab sich der Schöpfkäse während der weiteren Verdichtung sich auf zwei Drittel bis ein Drittel, insbesondere auf etwa die Hälfte, seiner Höhe senkt.

28. Verfahren nach einem der Ansprüche 17 bis 27, dadurch gekennzeichnet, daß der Bärlauch in zerkleinerter Form in Käse eingebracht wird, insbesondere in Molke suspendiert und die Suspension dann in mindestens weitgehend gefertigten Frischkäse eingeimpft, insbesondere eingespritzt wird.

29. Verfahren nach einem der Ansprüche 26 bis 28, dadurch gekennzeichnet, daß gegenseitige Paßflächen aufweisende Portionen von Schöpfkäse in vorgereiftem Stadium an mindestens einer Paßfläche stellenweise mit zerkleinertem Bärlauch belegt werden und die Portionen dann an den Paßflächen aneinandergelegt werden und daß man die Portionen an den nicht belegten Flächenbezirken der Paßflächen durch weitere Verdichtung des Schöpfkäse zusammenwachsen läßt.

## Claims

1. Wild garlic (allium ursinum), particularly as a seasoning agent, characterized in that large leaf fragments or whole leaves are lyophilized.

2. Wild garlic according to claim 1, characterized in that it is free from a sterilization treatment.

3. Wild garlic according to claim 1 or 2, characterized in that it is free from a heat treatment.

4. Wild garlic according to one of the preceding claims, characterized in that, apart from lyophilization, it is in the native, untreated form.

5. Wild garlic according to one of the preceding claims, characterized in that it is the wild form of wild garlic and the leaves are preferably collected from woodland sites.

6. Wild garlic according to one of the preceding claims, characterized in that the lyophilized leaves are in a comminuted form suitable for the intended seasoning.

7. Wild garlic according to one of the preceding claims, characterized in that it is in a form at least partly reconstituted with liquids having an aqueous base, particularly food liquids.

8. Wild garlic according to one of the preceding claims, characterized in that it is in an at least partly reconstituted form in conjunction with foods which have to be refrigerated and which are preferably free from preservatives.

9. Wild garlic according to one of the preceding claims, characterized in that it is present in conjunction with processed milk products, which are preferably not heated following wild garlic addition.

10. Wild garlic according to claim 9, characterized in that the milk products contain bacteria resulting from their processing and are preferably slightly sour.

11. Wild garlic according to claim 9 or 10, characterized in that it is in the interior and/or on the surface of fresh cheese.

12. Wild garlic according to one of the preceding claims, characterized in that it is in the form of a seasoning powder, optionally mixed with other spices and/or salt, without the admixing of preservatives and/or flavour enhancers.

13. Wild garlic according to one of the preceding claims, characterized in that it is in the form of capsules or in the form of mouldings or tablets optionally provided with a coating.

14. Use of wild garlic according to one of the claims 1 to 7 as a seasoning for foods.

15. Use of wild garlic according to one of the claims 1 to 7 for reducing the common salt content of salted foods, particularly sausage.

16. Use of growth-inhibiting substances contained in wild garlic after lyophilization for inhibiting the growth of wild garlic-entrained bacteria into foods seasoned therewith.

17. Process for the processing of wild garlic according to one of the claims 1 to 13, characterized in that whole leaves of wild garlic (allium ursinum) are frozen and lyophilized, the leaf temperatures being kept below 35°C, particularly below 30°C.

18. Process according to claim 17, characterized in that lyophilization is performed at a pressure of <10 mbar, particularly <5mbar.

19. Process according to claim 17 or 18, characterized in that lyophilization is performed to a residual water content of approximately 2%.

20. Process according to one of the claims 17 to 19, characterized in that lyophilization is carried out without the return of flavours.

21. Process according to one of the claims 17 to 20, characterized in that harvest-fresh leaves are washed with water without any further pretreatment, carefully freed from the main quantity of adhering water, frozen and, optionally following intermediate storage in a freezer, are supplied to the lyophilization process.

22. Process according to one of the claims 17 to 21, characterized in that the leaves are refrigerated substantially immediately following harvesting and optionally are transported, accompanied by refrigeration.

23. Process according to one of the claims 17 to 22, characterized in that the lyophilized leaves are comminuted and the comminuted leaves are fractionated, preferably according to their size.

24. Process according to one of the claims 17 to 23, characterized in that the optionally comminuted leaves are at least partly reconstituted with aqueous liquids.

25. Process according to claim 24, characterized in that for reconstitution use is made of less liquid than corresponds to the natural water content of the wild garlic leaves and the residual water quantity is optionally extracted from an aqueous food mixed with the wild garlic.

26. Process according to one of the claims 17 to 25, characterized in that the wild garlic is introduced into fresh cheese, preferably into substantially, but not completely finished scooping cheese.

27. Process according to claim 26, characterized in that the wild garlic is introduced in a whey draining stage of scooping cheese, preferably as from a stage from which the height of the scooping cheese is reduced during further compression to two thirds to one third, particularly to approximately half.

28. Process according to one of the claims 17 to 27, characterized in that the wild garlic in comminuted form is introduced into cheese, particularly suspended in the whey and the suspension is then inoculated and particularly injected into the at least substantially finished fresh cheese.

29. Process according to one of the claims 26 to 28, characterized in that the scooping cheese portions having opposite mating surfaces are coated in the prematured stage on at least one mating surface and in zonal manner with comminuted wild garlic and the portions are then engaged with one another at the mating surfaces and that then the portions are allowed to coalesce at the uncoated surface areas of the mating surfaces by further compression of the scooping cheese.

## Revendications

1. Ail sauvage (Allium Ursinum), en particulier comme condiment, caractérisé en ce que des gros morceaux de feuille jusqu'à des feuilles entières (étalage) sont lyophilisés.

2. Ail sauvage selon la revendication 1, caractérisé en ce qu'il n'est pas soumis à un traitement contre les germes.

3. Ail sauvage selon la revendication 1, caractérisé en ce qu'il n'est pas soumis à un traitement thermique.

4. Ail sauvage selon l'une des revendications précédentes, caractérisé en ce qu'il est présenté sous forme naturelle non traitée, excepté la lyophilisation.

5. Ail sauvage selon l'une des revendications précédentes, caractérisé en ce qu'il s'agit d'une forme sauvage d'ail et que les feuilles sont recueillies de préférence dans des réserves naturelles.

6. Ail sauvage selon l'une des revendications précédentes, caractérisé en ce que les feuilles lyophilisées sont disponibles sous forme broyée convenant à l'usage de condiment.

7. Ail sauvage selon l'une des revendications précédentes, caractérisé en ce qu'il se trouve sous forme au moins partiellement reconstituée avec des liquides à base aqueuse, en particulier des liquides alimentaires.

8. Ail sauvage selon l'une des revendications précédentes, caractérisé en ce qu'il se trouve sous forme au moins partiellement reconstituée en association avec des aliments réfrigérés qui sont de préférence sans conservateur.

9. Ail sauvage selon l'une des revendications précédentes, caractérisé en ce qu'il est disponible en association avec des produits laitiers traités (enrichis) qui de préférence ne sont pas chauffés après l'apport d'ail sauvage.

10. Ail sauvage, selon la revendication 9, caractérisé en ce que les produits laitiers contiennent des germes issus de leur transformation et qu'ils sont de préférence légèrement amers de préférence.

11. Ail sauvage, selon la revendication 9 ou 10, caractérisé en ce qu'il se trouve à l'intérieur et/ou à la surface de fromages frais.

12. Ail sauvage selon l'une des revendications précédentes, caractérisé en ce qu'il se présente sous forme de condiments en poudre éventuellement dans des mélanges avec d'autres condiments et/ou sel sans ajout de conservateurs et/ou d'arômes artificiels.

13. Ail sauvage selon l'une des revendications précédentes, caractérisé en ce qu'il se présente sous forme de capsules et le cas échéant sous forme de cachets ou de comprimés enrobés.

14. Utilisation de l'ail sauvage selon l'une des revendications 1 à 7 en tant que condiment dans l'alimentation.

15. Utilisation de l'ail sauvage selon l'une des revendications 1 à 7 pour la diminution de la teneur en sel de cuisine dans les aliments salés en' particulier la charcuterie.

16. Utilisation de substances, contenues dans l'ail sauvage après la lyophilisation, défavorables à la croissance, pour freiner la croissance de germes apportés avec l'ail sauvage dans les aliments épicés à l'ail sauvage.

17. Procédé de préparation de l'ail sauvage selon l'une des revendications 1 à 13, caractérisé en ce que des feuilles entières respectivement des branches d'ail sauvage (allium ursinum) sont lyophilisées, les températures des feuilles étant maintenues en dessous de 35°C de préférence en dessous de 30°C.

18. Procédé selon la revendication 17, caractérisé en ce que la lyophilisation s'effectue à une pression < 10 mbars en particulier < 5 mbars.

19. Procédé selon la revendication 17 ou 18, caractérisé en ce que la lyophilisation est effectuée de manière à laisser une teneur résiduelle en eau d'environ 2 %.

20. Procédé selon l'une des revendications 17 à 19, caractérisé en ce que la lyophilisation est effectuée sans retour d'arômes.

21. Procédé selon l'une des revendications 17 à 20, caractérisé en ce que les feuilles fraîchement récoltées sont lavées à l'eau sans traitement préalable, sont débarrassées en douceur de l'excédent d'eau, sont congelées et éventuellement après un stockage intermédiaire en congélation sont amenées à la lyophilisation.

22. Procédé selon l'une des revendications 17 à 21, caractérisé en ce que les feuilles sont refroidies sensiblement juste après la récolte et sont éventuellement transportées en chambre froide.

23. Procédé selon l'une des revendications 17 à 22, caractérisé en ce que les feuilles lyophilisées sont broyées et les feuilles broyées sont fractionnées de préférence suivant leur taille.

24. Procédé selon l'une des revendications 17 à 23, caractérisé en ce que les feuilles éventuellement broyées sont au moins partiellement reconstituées avec des liquides aqueux.

25. Procédé selon la revendication 24, caractérisé en ce que la reconstitution utilise une quantité de liquide inférieure à celui correspondant à la teneur en eau naturelle des feuilles d'ail sauvage et que la quantité d'eau résiduelle est extraite éventuellement d'un aliment contenant de l'eau et mélangé à l'ail sauvage.

26. Procédé selon l'une des revendications 17 à 25, caractérisé en ce que l'ail sauvage est introduit dans du fromage frais, mais de préférence dans des fromages à la louche en cours de fabrication.

27. Procédé selon la revendication 26, caractérisé en ce que l'ajout d'ail sauvage à un stade de fermentation de fromage à la louche de préférence au stade où le fromage à la louche se réduit de deux tiers, jusqu'à un tiers, en particulier quand il s'affaisse à la moitié de sa hauteur pendant la poursuite du compactage.

28. Procédé selon l'une des revendications 17 à 27, caractérisé en ce que l'ail sauvage est introduit sous forme broyée dans le fromage, en particulier en suspension dans le petit lait et la suspension est inoculée, en particulier injectée dans le fromage arrivé au moins principalement à maturation.

29. Procédé selon l'une des revendications 26 à 28, caractérisé en ce que des portions de fromage à la louche présentant des surfaces symétriques sont garnies au stade de prématuration sur au moins une des faces symétriques par endroit d'ail sauvage broyé et que les portions sont appliquées les unes contre les autres par les surfaces symétriques et qu'on laisse se souder les portions aux zones de surfaces non garnies des surfaces symétriques lors de la poursuite du compactage du fromage frais.
